# EUROPEAN PATENT SPECIFICATION

(11) **EP 3 821 994 B1**
(45) Date of publication and mention of the grant of the patent: **16.08.2023**
(21) Application number: 20207319.3
(22) Date of filing: 12.11.2020
(51) Int. Cl.: B21B 39/14

(54) **ROLLING MILL AREA PRODUCTION EQUIPMENT WITH PUSH PLATE ANGLE-ADJUSTABLE SIDE GUIDE AND HOT ROLLING PRODUCTION LINE**
WALZWERKBEREICHPRODUKTIONSAUSRÜSTUNG MIT WINKELVERSTELLBARER BETÄTIGUNGSPLATTENSEITENFÜHRUNG UND WARMWALZPRODUKTIONSLINIE
ÉQUIPEMENT DE PRODUCTION DE ZONE DE LAMINOIR AVEC GUIDE LATÉRAL RÉGLABLE PAR ANGLE DE PLAQUE DE POUSSÉE ET LIGNE DE PRODUCTION DE LAMINAGE À CHAUD

(30) Priority: 12.11.2019 CN 201911099079
(43) Date of publication of application: 19.05.2021
(73) Proprietor: MCC Capital Engineering & Research Incorporation Limited, 100176 Beijing (CN); CERI Technology Company Limited, 100176 Beijing (CN)
(72) Inventor: REN, Jijun, 100176 Beijing (CN); CAO, Jianning, 100176 Beijing (CN); HAN, Wen, 100176 Beijing (CN); ZHOU, Xikang, 100176 Beijing (CN); ZHOU, Yating, 100176 Beijing (CN); FU, Bin, 100176 Beijing (CN); BAI, Bing, 100176 Beijing (CN); LIU, Yanjun, 100176 Beijing (CN)
(74) Representative: Slingsby Partners LLP

(56) References cited:
- JP-A- S6 195 711
- JP-U- S53 102 934
- KR-A- 20090 070 978
- KR-A- 20140 041 180

## Description

### TECHNICAL FIELD

The present disclosure relates to technical field of a hot-rolling mill, and in particular to a rolling mill area production equipment with a push plate angle-adjustable side guide, and a hot rolling production line.

### BACKGROUND

In recent years, with the rapid improvement of the production capacity of medium and heavy plates in China, the output of medium and heavy plates has greatly increased, and the market competition has become increasingly fierce. How to expand the rollingable specification range of slabs, improve the productivity and increase the yield of steel plates has become the focus and difficulty in this field.

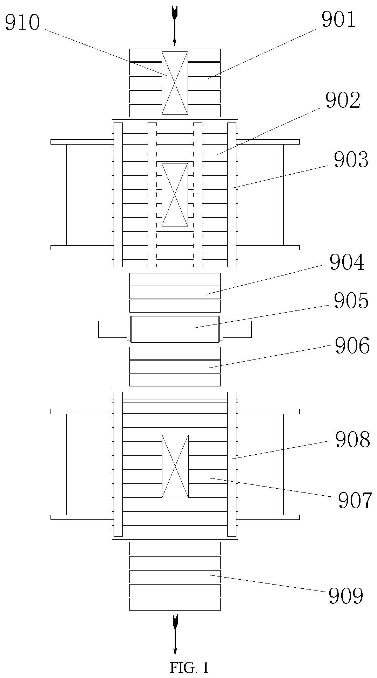

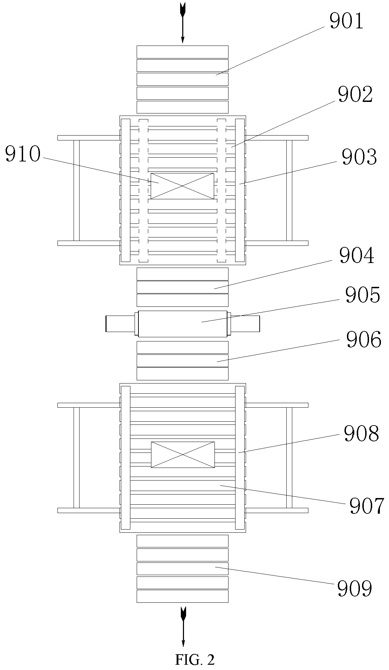

At present, as illustrated in FIGs. 1 and 2, the conventional production line in the rolling mill area sequentially comprises an entry side conveying roller table 901, an entry side rotary roller table 902, an entry side feed roller 904, a mill roll 905, an exit side feed roller 906, an exit side rotary roller table 907 and an exit side conveying roller table 909 from upstream to downstream. Entry side guides are respectively disposed on two sides of the entry side rotary roller table 902, and inlet push plates 903 are disposed on the entry side guides. Exit side guides are respectively disposed on two sides of the exit side rotary roller table 907, and outlet push plates 908 are disposed on the exit side guides. During the rolling of the medium and heavy plates, a rolling piece 910 is adjusted by the entry side rotary roller table 902 to a preset angle, and then subjected to forward rolling by the mill roll 905 after angle adjustment; the rolling piece 910 after the forward rolling is adjusted by the exit side rotary roller table 907 to a preset angle again, and then is subjected to backward rolling by the mill roll 905 after angle adjustment. The rolling piece 910 can be directly output or subjected to the subsequent conventional longitudinal rolling after multiple times of forward and reverse angular rolling productions according to the requirements of the production process.

However, in the existing conventional production line, the preset angle of the rolling piece 910 is adjusted by the cooperation of the side guides disposed on two sides of the production line, the response speed is slow, and the time for adjusting the preset angle of the rolling piece 910 is long, which are not conducive to the improvement of production efficiency. Moreover, the adjustment angle of the rolling piece 910 by the side guide is usually horizontal or longitudinal, and the adjustment angle is greatly restricted.

Regarding the problems of slow speed and low accuracy in the adjustment of the preset angle of the rolling piece by the rolling mill in related art, no effective solution has been proposed yet.

Therefore, based on years of experiences and practices in related industries, the inventors of the present application propose a rolling mill area production equipment with a push plate angle-adjustable side guide, and a hot rolling production line, so as to overcome the defects of the prior art.

Document D1 (KR 2014/0041180 A) discloses a moving apparatus for rolling mill and control method thereof. The present invention includes a sensing unit, a rotation driving unit, an alignment driving unit, a transfer driving unit, and a control unit, where the rotation driving unit is used for rotating a workpiece in the direction required by a rolling process. A rolling mill area production equipment with a push plate angle-adjustable side guide according to the preamble of claim 1 is known from document JPS53102934U.

### SUMMARY

An object of the present invention is to provide a rolling mill area production equipment with a push plate angle-adjustable side guide and a hot rolling production line.

The object of the present invention can be achieved by adopting the following technical solutions.

There is provided in the present invention a rolling mill area production equipment with a push plate angle-adjustable side guide, comprising a side guide capable of adjusting an angle formed by a center line of a rolling piece and a rolling center line to a preset angle, wherein the side guide comprises push plates located on both sides of a rotary roller table, push arms connected with the push plates, and driven units, the driven units are able to drive the push arms so as to drive the push plates to move closer to the rolling piece, to clamp outer walls on both sides of the rolling piece and drive the rolling piece to rotate to the preset angle, wherein the push arms comprise a first push arm and a second push arm that are able to be telescopically adjusted, and the push plate is pivotally connected to ends on the same side of the first push arm and the second push arm, the driven units are able to adjust expansion and contraction of the first push arm and the second push arm in a direction approaching to the rolling piece, so as to adjust the preset angle of the push plates, so that the push plates are able to clamp the outer walls on both sides of the rolling piece; the first push arm and the second push arm are disposed in parallel in a horizontal direction, the first push arm and the second push arm are fixed on both sides of the rotary roller table, an installation groove is provided on a side wall of the push plate, and an end on one side of the first push arm extends into the installation groove and is pivotally connected to an inner wall of the installation groove , a cylindrical hinge member is fixed on an end on one side of the second push arm, elongated hinge holes are provided respectively on top and bottom inner walls of the installation groove , and the end of the second push arm extends into the installation groove and top and bottom of the hinge member are able to be slidably embedded in the corresponding hinge hole.

In a preferred embodiment of the present invention, the rotary roller table comprises the rotary roller table comprises an entry side rotary roller table and an exit side rotary roller table, there are a plurality of side guides, and a mill roll is disposed between an output end of the entry side rotary roller table and an input end of the exit side rotary roller table, and the plurality of side guides are correspondingly disposed on both sides of the entry side rotary roller table and the exit side rotary roller table.

In a preferred embodiment of the present invention, the side guide is configured such that the angle formed by the center line of the rolling piece and the rolling center line is adjustable to a preset angle within a range of -90° to +90°.

In a preferred embodiment of the present invention, the first push arm comprises a first telescopic rod and a first fixed box , the driven units comprises a first driving cylinder , the first fixed box is a rectangular cylindrical structure that is fixedly disposed in a horizontal direction, one end of the first fixed box is opened, one end of the first telescopic rod is able to slidably extend into the first fixed box from the opening, the other end of the first telescopic rod is pivotally connected to the push plate, and both ends of the first driving cylinder are correspondingly fixedly connected to the first fixed box and the first telescopic rod.

In a preferred embodiment of the present invention, the second push arm comprises a second telescopic rod and a second fixed box , the driven units comprises a second driving cylinder, the second fixed box is a rectangular cylindrical structure that is fixedly disposed in a horizontal direction, one end of the second fixed box is opened, one end of the second telescopic rod is able to slidably extend into the second fixed box from the opening, a hinge member is fixedly disposed on the other end of the second telescopic rod , and both ends of the second driving cylinder are correspondingly fixedly connected to outer walls of the second fixed box and the second telescopic rod.

In a preferred embodiment of the present invention, the first fixed box and the second fixed box are fixedly connected through a connecting rod.

In a preferred embodiment of the present disclosure, a wear-resistant sliding plate is fixedly disposed on the side wall of the push plate opposite to the installation groove.

In a preferred embodiment of the present invention, the entry side rotary roller table and the exit side rotary roller table are composed of a plurality of first roller tables disposed side by side in a horizontal direction, and each of the first roller tables is separated at the middle into two parts on the left and right. First roller table motors are provided on both sides of each of the first roller tables, and the left and right parts of the first roller table are driven by the first roller table motors located on both sides of the first roller table to rotate separately.

In a preferred embodiment of the present invention, an inlet stand roll is disposed between an output end of the entry side rotary roller table and the mill roll, and an outlet stand roll is disposed between the mill roll and the input end of the exit side rotary roller table.

In a preferred embodiment of the present invention, the inlet stand roll and the outlet stand roll are both composed of a plurality of second roller tables disposed side by side in a horizontal direction, and one side of each of the second roller tables is provided with a second roller table motor by which the second roller table is driven to rotate.

In a preferred embodiment of the present invention, the rolling mill area production equipment with a push plate angle-adjustable side guide further comprises an entry side conveying roller table and an exit side conveying roller table, an output end of the entry side conveying roller table is connected to an input end of the entry side rotary roller table, and the input end of the exit side conveying roller table is connected to the output end of the exit side rotary roller table.

In a preferred embodiment of the present invention, the entry side conveying roller table and the exit side conveying roller table are both composed of a plurality of third roller tables disposed side by side in a horizontal direction, one side of each of the third roller tables is provided with a third roller table motor by which the third roller table is driven to rotate.

The present invention provides a hot rolling production line, comprising a rolling mill installation area, in which the rolling mill installation area is provided therein with the rolling mill area production equipment with a push plate angle-adjustable side guide as described above.

In a preferred embodiment of the present invention, the rolling mill installation area is a single-stand rolling mill area, and the single-stand rolling mill area is provided therein with the rolling mill area production equipment with a push plate angle-adjustable side guide.

In a preferred embodiment of the present invention, the rolling mill installation area comprises a rough rolling mill area and a finishing rolling mill area, an output end of the rough rolling mill area is connected to an input end of the finishing rolling mill area, and the rolling mill area production equipment with a push plate angle-adjustable side guide is provided in the rough rolling mill area and/or the finishing rolling mill area.

In view of the above, the characteristics and advantages of the rolling mill area production equipment with a push plate angle-adjustable side guide and the hot rolling production line according to the present invention are as follows. The side guides that can adjust an angle formed by a center line of the rolling piece and a rolling center line to a preset angle are provided on both sides of the rotary roller table of the hot rolling production line. In the process that the rolling piece passes through the rotary roller table, the push plates located on both sides of the rolling piece are driven by the driven units to move in a direction approaching to the rolling piece, and clamp the two opposite outer walls of the rolling piece. By adjusting a rotation direction of the push plate in the horizontal direction, the rolling piece is driven to rotate, such that the preset angle of the rolling piece during the rolling process can be adjusted quickly and accurately, thereby meeting the requirements for the setting direction of the rolling piece, and shortening the time of adjusting the angle of the rolling piece. In addition, there is no need to manually adjust the lifting height and rotation angle of the rolling piece, thereby enhancing the degree of automation, reducing the operation difficulty, and greatly improving the production rhythm and production efficiency.

### BRIEF DESCRIPTION OF DRAWINGS

The following drawings are intended only to schematically illustrate and explain the present invention and do not limit the scope of the present invention. Among the drawings:
FIG. 1 is a schematic view of a structure of a rolling mill production line in the prior art for longitudinally rolling a rolling piece;
FIG. 2 is a schematic view of a structure of a rolling mill production line in the prior art for horizontally rolling a rolling piece;
FIG. 3 is a schematic view of a structure of a rolling mill area production equipment with a push plate angle-adjustable side guide according to an embodiment of the present invention;
FIG. 4 is a front view of a side guide of a rolling mill area production equipment with a push plate angle-adjustable side guide according to an embodiment of the present invention;
FIG. 5 is a perspective view of push plates of the side guide of a rolling mill area production equipment with a push plate angle-adjustable side guide in a straight state according to an embodiment of the present invention;
FIG. 6 is a perspective view of push plates of the side guide of a rolling mill area production equipment with a push plate angle-adjustable side guide in a tilted state according to the present disclosure; and
FIG. 7 is a top view of push plates of the rolling mill area production equipment with a push plate angle-adjustable side guide according to an embodiment of the present invention;

### Reference numbers in the prior art:

901: entry side conveying roller table; 902: entry side rotary roller table; 903: inlet push plate; 904: inlet stand roll; 905: mill roll; 906: outlet stand roll; 907: exit side rotary roller table; 908: outlet push plate; 909: exit side conveying roller table; 910: rolling piece.

### Reference numerals in the present disclosure:

1: entry side rotary roller table; 2: mill roll; 3: exit side rotary roller table; 4: entry side conveying roller table; 5: inlet stand roll; 6: outlet stand roll; 7: exit side conveying roller table; 8: side guide; 800: push arm; 801: push plate; 8011: installation groove; 8012: hinge hole; 802: first push arm; 8021: first telescopic rod; 8022: first fixed box; 803: second push arm; 8031: second telescopic rod; 8032: second fixed box; 8033: hinge member; 804: wear-resistant sliding plate; 805: connecting rod; 806: driven units; 8061: first driving cylinder; 8062: second driving cylinder; 10: rolling piece; 11: rotary roller table.

### DESCRIPTION OF EMBODIMENTS

In order to have clearer understanding of the technical features, objects and effects of the present invention, the specific embodiments of the present invention will now be described with reference to the drawings.

### Embodiment 1

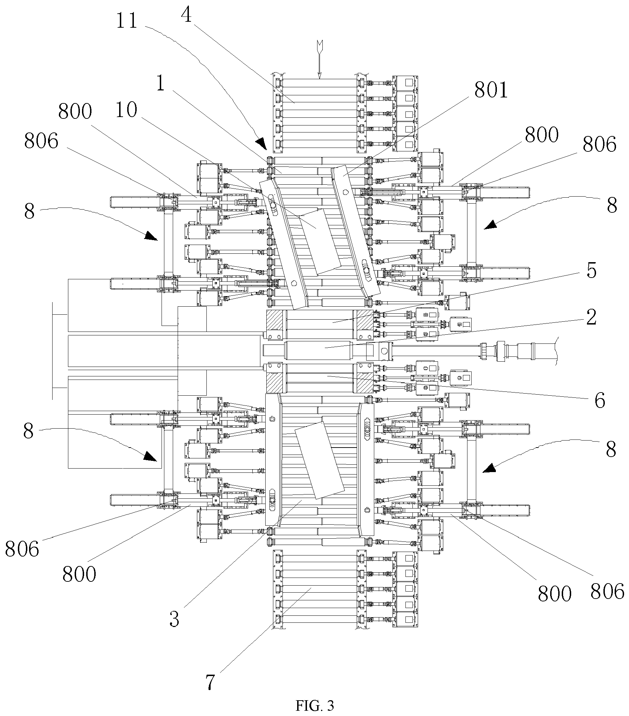

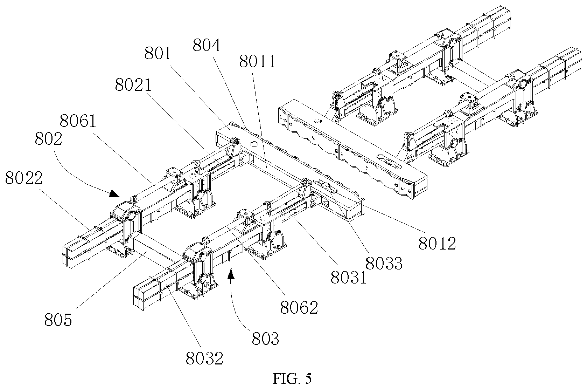

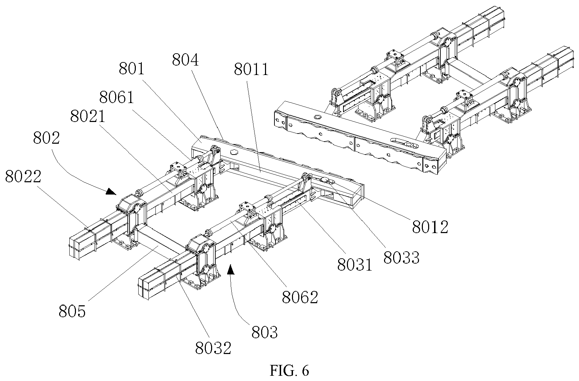

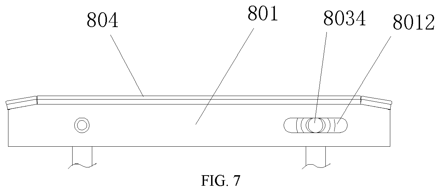

As shown in FIGs. 3 to 7, there is provided in the present embodiment a rolling mill area production equipment with a push plate angle-adjustable side guide, comprising a side guide 8 capable of adjusting an angle formed by a center line of the rolling piece 10 and a rolling center line to a preset angle, wherein the side guide 8 comprises push plates 801 located on both sides of a rotary roller table 11, push arms 800 connected with the push plates 801, and a driven units 806, the driven units 806 is able to drive the push arms 800 so as to drive the push plates 801 to move closer to the rolling piece 10, to clamp the outer walls on both sides of the rolling piece 10. In the present embodiment, in the process that the rolling piece 10 passes through the rotary roller table 11, the push plates 801 located on both sides of the rolling piece 10 are driven by the driven units 806 to move in a direction approaching to the rolling piece 10, and clamp the two opposite outer walls of the rolling piece 10; by adjusting the rotation direction of the push plate 801 in the horizontal direction, the rolling piece 10 is driven to rotate, and the preset angle of the rolling piece 10 during the rolling process can be adjusted quickly and accurately, thereby meeting the requirements for the setting direction of the rolling piece 10, and shortening the time of adjusting the angle of the rolling piece 10. In addition, there is no need to manually adjust the lifting height and rotation angle of the rolling piece 10, thereby enhancing the degree of automation, reducing the operation difficulty, and greatly improving the production rhythm and production efficiency.

The rolling mill area production equipment with a push plate angle-adjustable side guide further comprises conventional devices such as a plurality of conveying roller tables, a plurality of rotary roller tables, stand rolls and rolling mills, which cooperate with the side guide 8 to complete the rolling of the rolling piece.

Further, the driven units 806 may be, but is not limited to, an air cylinder, and an end of a piston rod located outside the air cylinder is fixedly connected to the push arm 800.

In an optional embodiment of the present invention, as shown in FIG. 3, the rotary roller table 11 comprises an entry side rotary roller table 1 and an exit side rotary roller table 3, there are a plurality of side guides 8, and a mill roll 2 is disposed between an output end of the entry side rotary roller table 1 and an input end of the exit side rotary roller table 3, and the plurality of side guides 8 are correspondingly disposed on both sides of the entry side rotary roller table 1 and the exit side rotary roller table 3. The side guides 8 are respectively disposed on both sides of the entry side rotary roller table 1 and the exit side rotary roller table 3 of the hot rolling production line, and in the process that the rolling piece 10 passes through the entry side rotary roller table 1 and the exit side rotary roller table 3, the push plate 801 on the side guide 8 clamps the rolling piece 10 and drives the rolling piece 10 to rotate, which improves the accuracy of the preset angle between the center line of the rolling piece 10 and the rolling center line.

Further, the angle formed by the center line of the rolling piece 10 and the rolling center line is adjusted to a preset angle within a range of -90° to +90° (that is, an angle adjustment range of the rolling piece 10 is 180°).

In an optional embodiment of the present invention, as shown in FIGS. 3 to 7, the push arm 800 comprises a first push arm 802 and a second push arm 803 that are able to be telescopically adjusted, and the push plate 801 is pivotally connected to the ends on the same side of the first push arm 802 and the second push arm 803, the driven units 806 can adjust the expansion and contraction of the first push arm 802 and the second push arm 803 in a direction approaching the rolling piece 10 to adjust the preset angle of the push plates 801, such that the push plates 801 clamp the outer walls of both sides of the rolling piece 10, thus it is convenient to control and adjust the angle of the push plates 801.

Specifically, as shown in FIGs. 3 to 7, the first push arm 802 and the second push arm 803 are disposed in parallel in a horizontal direction, and the first push arm 802 and the second push arm 803 are fixed on both sides of the entry side rotary roller table 1 or the exit side rotary roller table 3. An installation groove 8011 is provided on a side wall of the push plate 801 along an extension direction of the push plate 801. An end on one side of the first push arm 802 extends into the installation groove 8011 and is pivotally connected to the top and bottom inner wall of the installation groove 8011. An end of the second push arm 803 on the same side as the first push arm 802 is fixed with a vertically disposed cylindrical hinge member 8033. The top inner wall and the bottom inner wall of the installation groove 8011 are each provided with an elongated hinge hole 8012 respectively along the extension direction of the push plate 801. The end of the second push arm 803 extends into the installation groove 8011, and the top and bottom of the hinge member 8033 can be slidably inserted into the corresponding hinge hole 8012, the first push arm 802 and the second push arms 803 are correspondingly disposed at both ends of the installation groove 8011. In the working process, the push plate 801 can be driven by the synchronous expansion and contraction of the first push arm 802 and the second push arm 803 to move towards or away from the rolling piece 10; when the push plate 801 is close to the rolling piece 10, the expansion and contraction of the second push arm 803 will cause the hinge member 8033 at the end of the second push arm 803 to slide in the hinge hole 8012, thereby driving the push plate 801 to rotate with a pivot position between the first push arm 802 and the push plate 801 as an axle, to change the preset angle of the push plate 801, which in turn drives the rolling piece 10 to rotate to adjust the preset angle of the rolling piece 10.

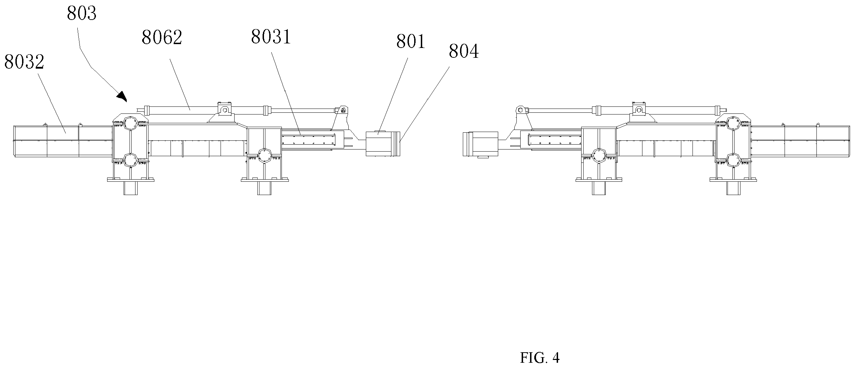

Specifically, as shown in FIGs. 4 to 6, the first push arm 802 comprises a first telescopic rod 8021 and a first fixed box 8022. The driven units 806 comprises a first driving cylinder 8061. The first telescopic rod 8021, the first driving cylinder 8061 and the first fixed box 8022 are disposed in a horizontal direction. The first fixed box 8022 is a rectangular cylindrical structure with one end closed and the other opened. A plurality of first fixed boxes 8022 are correspondingly fixed on both sides of the entry side rotary roller table 1 and the exit side rotary roller table 3. One end of the first telescopic rod 8021 can slidably extend into the first fixed box 8022 from the opening of the first fixed box 8022, and the other end of the first telescopic rod 8021 is pivotally connected to the push plate 801. The first driving cylinder 8061 is located above the first fixed box 8022 and the first telescopic rod 8021. One end of the first driving cylinder 8061 is fixedly connected to the top outer wall of the first fixed box 8022, and the other end of the first driving cylinder 8061 is fixedly connected to the top outer wall of the first telescopic rod 8021. The first telescopic rod 8021 is driven by the first driving cylinder 8061 to slide in the first fixed box 8022, so as to control the expansion and contraction of the first push arm 802. The second push arm 803 comprises a second telescopic rod 8031, a second driving cylinder 8062 and a second fixed box 8032. The driven units 806 comprises a second driving cylinder 8062. The second telescopic rod 8031, the second driving cylinder 8062 and the second fixed box 8032 are all disposed in a horizontal direction. The second fixed box 8032 is a rectangular cylindrical structure with one end closed and the other end opened. A plurality of second fixed boxes 8032 are correspondingly fixed on both sides of the entry side rotary roller table 1 and the exit side rotary roller table 3. One end of the second telescopic rod 8031 can slidably extend into the second fixed box 8032 from the opening of the second fixed box 8032, and the other end of the second telescopic rod 8031 is fixedly provided with a hinge member 8033, and is connected to the push plate 801 by the hinge member 8033. The second driving cylinder 8062 is located above the second fixed box 8032 and the second telescopic rod 8031. One end of the second driving cylinder 8062 is fixedly connected to the top outer wall of the second fixed box 8032, and the other end of the second driving cylinder 8062 is fixedly connected to the top outer wall of the second telescopic rod 8031. The second telescopic rod 8031 is driven by the second driving cylinder 8062 to slide in the second fixed box 8032, so as to control the expansion and contraction of the second push arm 803.

Further, the first driving cylinder 8061 and the second driving cylinder 8062 can be, but are not limited to, hydraulic driving cylinders.

Further, the first fixed box 8022 and the second fixed box 8032 are fixedly connected by a connecting rod 805 that is disposed horizontally, and the stability of connection between the first fixed box 8022 and the second fixed box 8032 can be ensured by the connecting rod 805.

Specifically, as shown in FIGs. 4 to 6, one end of the connecting rod 805 is fixedly connected to the outer wall of the first fixing box 8022, and the other end of the connecting rod 805 is fixedly connected to the second fixing box 8032.

In an optional embodiment of the present invention, as shown in FIGs. 4 to 7, a wear-resistant sliding plate 804 is fixedly disposed on the side wall of the push plate 801, and the wear-resistant sliding plate 804 is located on the side wall opposite to the installation groove 8011, thereby ensuring that the push plate 801 has good wear resistance and prolonging the service life of the push plate 801.

Further, the wear-resistant sliding plate 804 can be, but is not limited to, high manganese alloy steel.

Further, as shown in FIG. 3, the entry side rotary roller table 1 and the exit side rotary roller table 3 are both composed of a plurality of first roller tables disposed side by side in a horizontal direction, each of the first roller tables is connected to a first roller table motor, and adjacent first roller table motors can drive the corresponding first roller tables to rotate in a same direction or in opposite directions. By controlling the rotation direction and the rotation speed of each of the first roller tables, it can be ensured that the rolling piece 10 smoothly rotates to the preset angle.

Further, when the rotation directions of the adjacent first roller tables on the entry side rotary roller table 1 and the exit side rotary roller table 3 are opposite to each other, the first roller tables can be grouped in odd and even numbers, wherein the first roller tables in a same odd or even group rotate in a same direction, while the first roller tables in an odd group and the first roller tables in an even group rotate in opposite directions (i.e., two adjacent first roller tables rotate in opposite directions, and two first roller tables with one first roller table therebetween rotate in a same direction).

Specifically, the first roller table motors may be disposed on the same side or on both sides of the entry side rotary roller table 1 and the exit side rotary roller table 3, as long as it is convenient to control the entry side rotary roller table 1 and the exit side rotary roller table 3. When it needs to control the first roller tables rotating in a same direction in the entry side rotary roller table 1 and the exit side rotary roller table 3, a gear distribution box may be connected to each of the first roller table motors, so as to centrally control the first roller tables rotating in the same direction, or each of the first roller tables is separately connected to one of the first roller table motors, so as to control each of the first roller tables independently.

Further, the entry side rotary roller table 1 and the exit side rotary roller table 3 may be connected to the first roller table motor in various transmission connection modes:
connection mode 1: the output shaft of the first roller table motor is connected to the first roller table through a coupling;
connection mode 2: the output shaft of the first roller table motor is connected to the first roller table through an extension shaft;
connection mode 3: the output shaft of the first roller table motor is connected to the first roller table through a speed reducer and a coupling in turn;
connection mode 4: the output shaft of the first roller table motor is connected to the first roller table through a speed reducer and an extension shaft in turn;
connection mode 5: the output shaft of the first roller table motor is connected to the first roller table through a speed reducer, a gear distribution box and a coupling in turn;
connection mode 6: the output shaft of the first roller table motor is connected to the first roller table through a speed reducer, a gear distribution box and an extension shaft in turn.

Specifically, the extension shaft may be, but is not limited to, a crosshead universal joint shaft, a drum gear j oint shaft or a combined j oint shaft.

Further, as illustrated in FIG. 3, an entry side feed roller 5 is disposed between an output end of the entry side rotary roller table 1 and the mill roll 2, and an exit side feed roller 6 is disposed between the mill roll 2 and an input end of the exit side rotary roller table 3. The entry side feed roller 5 and the exit side feed roller 6 are both composed of a plurality of second roller tables disposed side by side in a horizontal direction, one side of each of the second roller tables is provided with a second roller table motor which drives the second roller table to rotate, and an end portion of the second roller table is connected to the output shaft of the second roller table motor. The entry side feed roller 5 and the exit side feed roller 6 ensure the smooth input and output of the rolling piece 10 to the mill roll 2, thereby ensuring the smooth rolling of the rolling piece 10.

In one optional embodiment of the present invention, as illustrated in FIG. 3, the rolling mill area production equipment with the push plate angle-adjustable side guide further comprises an entry side conveying roller table 4 and an exit side conveying roller table 7, wherein an output end of the entry side conveying roller table 4 is connected to an input end of the entry side rotary roller table 1, and an input end of the exit side conveying roller table 7 is connected to an output end of the exit side rotary roller table 3. The entry side conveying roller table 4 and the exit side conveying roller table 7 are both composed of a plurality of third roller tables disposed side by side in a horizontal direction, one side of each of the third roller tables is provided with a third roller table motor which drives the third roller table to rotate, and an end portion of the third roller table is connected to an output shaft of the third roller table motor. The smooth input and output of the rolling piece 10 is ensured by the entry side conveying roller table 4 and the exit side conveying roller table 7.

During the working process of the rolling mill area production equipment with a push plate angle-adjustable side guide according to the present embodiment, when the rolling piece 10 enters the mill roll 2 through the entry side rotary roller table 1, according to the angle requirement of the corner rolling production process, the push plates 801 on both sides of the entry side rotary roller table 1 respectively move in the direction approaching to the rolling piece 10 and correspondingly clamp the outer walls of both sides of the rolling piece 10, the push plate 801 on both sides drives the rolling piece 10 in the middle to rotate, so as to adjust the preset angle of the rolling piece 10 to realize the forward rolling of the rolling piece 10. After the rolling piece 10 undergoes forward rolling, it enters the mill roll 2 through the exit side rotary roller table 3, according to the angle requirement of the angle rolling production process, the push plates 801 on both sides of the exit side rotary roller table 3 move respectively in the direction approaching to the rolling piece 10 and correspondingly clamp the outer walls of both sides of the rolling piece 10. The push plates 801 on both sides drive the rolling piece 10 in the middle to rotate, thereby adjusting the preset angle of the rolling piece 10, to realize the reverse rolling of the rolling piece 10. According to the requirements of the production process, after the rolling piece 10 undergoes multiple passes of forward and reverse angle rolling production, it can be directly exported to the outside or subjected to subsequent conventional longitudinal rolling.

The rolling mill area production equipment with a push plate angle-adjustable side guide according to the present invention has the following features and advantages:

In the rolling mill area production equipment with a push plate angle-adjustable side guide, side guides that can adjust the preset angle of the rolling piece 10 are provided on both sides of the entry side rotary roller table 1 and the exit side rotary roller table 3; in the process that the rolling piece 10 passes through the entry side rotary roller table 1 and the exit side rotary roller table 3, the push plates 801 located on both sides of the rolling piece 10 move in the direction closer to the rolling piece 10 and cooperate to clamp the two opposite outer walls of the rolling piece 10; by adjusting the preset angle of the push plate 801 in the horizontal direction to drive the rolling piece 10 to rotate, the preset angle of the rolling piece 10 during the rolling process can be adjusted quickly and accurately, thereby meeting the requirements for the setting direction of the rolling piece 10, and shortening the adjustment time of adjusting the angle of the rolling piece 10; in addition, there is no need to manually adjust the lifting height and rotation angle of the rolling piece 10, the degree of automation is high, the operation difficulty is reduced, and the production rhythm and production efficiency are greatly improved.

### Embodiment 2

The present embodiment provides a hot rolling production line, comprising a rolling mill installation area, in which the rolling mill installation area is provided therein with the rolling mill area production equipment with a push plate angle-adjustable side guide as described above.

In an embodiment of the present invention, the rolling mill installation area is a single-stand rolling mill area, and the single-stand rolling mill area is provided therein with the rolling mill area production equipment with a push plate angle-adjustable side guide. Wherein a rolling mill is installed in the single-stand rolling mill area, which can output the rolling piece 10 after rough rolling and finishing rolling.

In another embodiment of the present invention the rolling mill installation area comprises a rough rolling mill area and a finishing rolling mill area, an output end of the rough rolling mill area is connected to an input end of the finishing rolling mill area, and the rolling mill area production equipment with a push plate angle-adjustable side guide is provided in the rough rolling mill area and/or the finishing rolling mill area. Wherein the rough rolling mill area and the finishing rolling mill area are each provided with a rolling mill. After the rolling piece 10 passes through the rough rolling mill area for rough rolling treatment, it passes through the finishing rolling mill area for finishing rolling treatment, and is finally output to the outside.

In the hot rolling production line, the rolling mill area production equipment with a push plate angle-adjustable side guide is disposed in the rolling mill installation area. The push plates 801 located on both sides of the rolling piece 10 clamp the outer wall of the rolling piece 10 and drive the rolling piece 10 to rotate, the preset angle of the rolling piece 10 during the rolling process can be adjusted quickly and accurately, thereby shortening the adjustment time of adjusting the angle of the rolling piece 10, improving the automation degree of the hot rolling production line, reducing the difficulty of operation, and improving production efficiency of the hot rolling production line.

Those described above are just specific embodiments of the present invention, and are not intended to limit the scope of the present invention. Any equivalent change and modification made by those skilled in the art without departing from the concept and principle of the present invention should fall within the protection scope of the present invention as defined by the appended claims.

## Claims

1. A rolling mill area production equipment with a push plate angle-adjustable side guide, comprising a side guide (8) capable of adjusting an angle formed by a center line of a rolling piece (10) and a rolling center line to a preset angle, **characterized in that** the side guide (8) comprises push plates (801) located on both sides of a rotary roller table (11), push arms (800) connected with the push plates (801), and driven units (806), the driven units (806) are able to drive the push arms (800) so as to drive the push plates (801) to move closer to the rolling piece (10), to clamp outer walls on both sides of the rolling piece (10) and drive the rolling piece (10) to rotate to the preset angle;
wherein the push arms (800) comprise a first push arm (802) and a second push arm (803) that are able to be telescopically adjusted, and the push plate (801) is pivotally connected to ends on the same side of the first push arm (802) and the second push arm (803), the driven units (806) are able to adjust expansion and contraction of the first push arm (802) and the second push arm (803) in a direction approaching to the rolling piece (10), so as to adjust the preset angle of the push plates (801), such that the push plates (801) are able to clamp the outer walls on both sides of the rolling piece (10);
wherein the first push arm (802) and the second push arm (803) are disposed in parallel in a horizontal direction, the first push arm (802) and the second push arm (803) are fixed on both sides of the rotary roller table (11), **characterized in that**:
an installation groove (8011) is provided on a side wall of the push plate (801), and an end on one side of the first push arm (802) extends into the installation groove (8011) and is pivotally connected to an inner wall of the installation groove (8011), a cylindrical hinge member (8033) is fixed on an end on one side of the second push arm (803), elongated hinge holes (8012) are provided respectively on top and bottom inner walls of the installation groove (8011), and the end of the second push arm (803) extends into the installation groove (8011) and top and bottom of the hinge member (8033) are able to be slidably embedded in the corresponding hinge hole (8012).

2. The rolling mill area production equipment with a push plate angle-adjustable side guide according to claim 1, wherein the rotary roller table (11) comprises an entry side rotary roller table (1) and an exit side rotary roller table (3), there are a plurality of side guides (8), and a mill roll (2) is disposed between an output end of the entry side rotary roller table (1) and an input end of the exit side rotary roller table (3), and the plurality of side guides (8) are correspondingly disposed on both sides of the entry side rotary roller table (1) and the exit side rotary roller table (3).

3. The rolling mill area production equipment with a push plate angle-adjustable side guide according to claim 1, the side guide (8) being configured such that the angle formed by the center line of the rolling piece (10) and the rolling center line is adjustable to a preset angle within a range of -90° to +90°.

4. The rolling mill area production equipment with a push plate angle-adjustable side guide according to claim 1, wherein the first push arm (802) comprises a first telescopic rod (8021) and a first fixed box (8022), the driven units (806) comprises a first driving cylinder (8061), the first fixed box (8022) is a rectangular cylindrical structure that is fixedly disposed in a horizontal direction, one end of the first fixed box (8022) is opened, one end of the first telescopic rod (8021) is able to slidably extend into the first fixed box (8022) from the opening, the other end of the first telescopic rod (8021) is pivotally connected to the push plate (801), and both ends of the first driving cylinder (8061) are correspondingly fixedly connected to the first fixed box (8022) and the first telescopic rod (8021).

5. The rolling mill area production equipment with a push plate angle-adjustable side guide according to claim 4, wherein the second push arm (803) comprises a second telescopic rod (8031) and a second fixed box (8032), the driven units (806) comprises a second driving cylinder (8062), the second fixed box (8032) is a rectangular cylindrical structure that is fixedly disposed in a horizontal direction, one end of the second fixed box (8032) is opened, one end of the second telescopic rod (8031) is able to slidably extend into the second fixed box (8032) from the opening, a hinge member (8033) is fixedly disposed on the other end of the second telescopic rod (8031), and both ends of the second driving cylinder (8062) are correspondingly fixedly connected to outer walls of the second fixed box (8032) and the second telescopic rod (8031).

6. The rolling mill area production equipment with a push plate angle-adjustable side guide according to claim 5, wherein the first fixed box (8022) and the second fixed box (8032) are fixedly connected through a connecting rod (805).

7. The rolling mill area production equipment with a push plate angle-adjustable side guide according to claim 1, wherein a wear-resistant sliding plate (804) is fixedly disposed on the side wall of the push plate (801) opposite to the installation groove (8011).

8. The rolling mill area production equipment with a push plate angle-adjustable side guide according to claim 2, wherein the entry side rotary roller table (1) and the exit side rotary roller table (3) are both composed of a plurality of first roller tables disposed side by side in a horizontal direction, the first roller tables are connected to first roller table motors respectively, and the adjacent first roller table motors are able to drive the corresponding first roller tables to rotate in a same direction or in opposite directions.

9. The rolling mill area production equipment with a push plate angle-adjustable side guide according to claim 2, wherein an inlet stand roll (5) is disposed between an output end of the entry side rotary roller table (1) and the mill roll (2), and an outlet stand roll (6) is disposed between the mill roll (2) and the input end of the exit side rotary roller table (3);
wherein the inlet stand roll (5) and the outlet stand roll (6) are both composed of a plurality of second roller tables disposed side by side in a horizontal direction, and one side of each of the second roller tables is disposed with a second roller table motor by which the second roller table is driven to rotate.

10. The rolling mill area production equipment with a push plate angle-adjustable side guide according to claim 2, further comprising an entry side conveying roller table (4) and an exit side conveying roller table (7), an output end of the entry side conveying roller table (4) is connected to an input end of the entry side rotary roller table (1), and the input end of the exit side conveying roller table (7) is connected to the output end of the exit side rotary roller table (3);
wherein the entry side conveying roller table (4) and the exit side conveying roller table (7) are both composed of a plurality of third roller tables disposed side by side in a horizontal direction, one side of each of the third roller tables is provided with a third roller table motor by which the third roller table is driven to rotate.

11. A hot rolling production line comprising a rolling mill installation area, wherein the rolling mill installation area is provided therein with the rolling mill area production equipment with a push plate angle-adjustable side guide according to any of claims 1 to 10.

12. The hot rolling production line according to claim 11, wherein the rolling mill installation area is a single-stand rolling mill area, and the single-stand rolling mill area is provided therein with the rolling mill area production equipment with a push plate angle-adjustable side guide.

13. The hot rolling production line according to claim 11, wherein the rolling mill installation area comprises a rough rolling mill area and a finishing rolling mill area, an output end of the rough rolling mill area is connected to an input end of the finishing rolling mill area, and the rolling mill area production equipment with a push plate angle-adjustable side guide is provided in the rough rolling mill area and/or the finishing rolling mill area.

## Patentansprüche

1. Walzwerkbereich-Produktionsausrüstung mit einer winkelverstellbaren Betätigungsplattenseitenführung, umfassend eine Seitenführung (8), die in der Lage ist, einen Winkel, der durch eine Mittellinie eines Rollenstücks (10) und eine Rollenmittellinie gebildet wird, an einen voreingestellten Winkel anzupassen, **dadurch gekennzeichnet, dass** die Seitenführung (8) Betätigungsplatten (801), die auf beiden Seiten eines Drehrollentischs (11) angeordnet sind, Betätigungsarme (800), die mit den Betätigungsplatten (801) verbunden sind, und angetriebene Einheiten (806) umfasst, wobei die angetriebenen Einheiten (806) in der Lage sind, die Betätigungsarme (800) so anzutreiben, dass die Betätigungsplatten (801) sich näher an das Rollenstück (10) heranbewegen, um Außenwände auf beiden Seiten des Rollenstücks (10) festzuklemmen und das Rollenstück (10) zum Drehen in den voreingestellten Winkel anzutreiben;
wobei die Betätigungsarme (800) einen ersten Betätigungsarm (802) und einen zweiten Betätigungsarm (803) umfassen, die in der Lage sind, teleskopisch angepasst zu werden, und die Betätigungsplatte (801) drehbar mit Enden auf der gleichen Seite des ersten Betätigungsarms (802) und des zweiten Betätigungsarms (803) verbunden ist, wobei die angetriebenen Einheiten (806) in der Lage sind, die Ausdehnung und das Zusammenziehen des ersten Betätigungsarms (802) und des zweiten Betätigungsarms (803) in einer Richtung, die sich dem Rollenstück (10) nähert, anzupassen, um den voreingestellten Winkel der Betätigungsplatten (800) so anzupassen, dass die Betätigungsplatten (801) in der Lage sind, die Außenwände auf beiden Seiten des Rollenstücks (10) festzuklemmen;
wobei der erste Betätigungsarm (802) und der zweite Betätigungsarm (803) parallel in einer horizontalen Richtung angeordnet sind, wobei der erste Betätigungsarm (802) und der zweite Betätigungsarm (803) auf beiden Seiten des Drehrollentischs (11) befestigt sind, **dadurch gekennzeichnet, dass**:
eine Montagenut (8011) an einer Seitenwand der Betätigungsplatte (801) bereitgestellt ist und ein Ende auf einer Seite des ersten Betätigungsarms (802) sich in die Montagenut (8011) erstreckt und drehbar mit einer Innenwand der Montagenut (8011) verbunden ist, wobei ein zylindrisches Scharnierelement (8033) an einem Ende auf einer Seite des zweiten Betätigungsarms (803) befestigt ist, längliche Scharnierlöcher (8012) an der oberen bzw. unteren Innenwand der Montagenut (8011) bereitgestellt sind und das Ende des zweiten Betätigungsarms (803) sich in die Montagenut (8011) erstreckt und das obere und untere Ende des Scharnierelements (8033) verschiebbar in das entsprechende Scharnierloch (8012) eingebettet werden kann.

2. Walzwerkbereich-Produktionsausrüstung mit einer winkelverstellbaren Betätigungsplattenseitenführung nach Anspruch 1, wobei der Drehrollentisch (11) einen eintrittsseitigen Drehrollentisch (1) und einen austrittsseitigen Drehrollentisch (3) umfasst, sowie eine Vielzahl von Seitenführungen (8) vorhanden sind, und ein Rollenwerk (2) zwischen einem Ausgabeende des eintrittsseitigen Drehrollentischs (1) und einem Eingabeende des austrittsseitigen Drehrollentischs (3) angeordnet ist, und die Vielzahl von Seitenführungen (8) entsprechend auf beiden Seiten des eintrittsseitigen Drehrollentischs (1) und des austrittsseitigen Drehrollentischs (3) angeordnet sind.

3. Walzwerkbereich-Produktionsausrüstung mit einer winkelverstellbaren Betätigungsplattenseitenführung nach Anspruch 1, wobei die Seitenführung (8) so konfiguriert ist, dass der von der Mittellinie des Rollenstücks (10) und der Rollenmittellinie gebildete Winkel auf einen voreingestellten Winkel innerhalb eines Bereichs von -90° bis +90° anpassbar ist.

4. Walzwerkbereich-Produktionsausrüstung mit einer winkelverstellbaren Betätigungsplattenseitenführung nach Anspruch 1, wobei der erste Betätigungsarm (802) eine erste Teleskopstange (8021) und einen ersten festen Kasten (8022) umfasst, die angetriebenen Einheiten (806) einen ersten Antriebszylinder (8061) umfassen, der erste feste Kasten (8022) eine rechteckige zylindrische Struktur ist, die in einer horizontalen Richtung fest angeordnet ist, ein Ende des ersten festen Kastens (8022) geöffnet ist, ein Ende der ersten Teleskopstange (8021) von der Öffnung aus sich in den ersten festen Kasten (8022) verschiebbar erstrecken kann, das andere Ende der ersten Teleskopstange (8021) drehbar mit der Betätigungsplatte (801) verbunden ist und beide Enden des ersten Antriebszylinders (8061) entsprechend fest mit dem ersten festen Kasten (8022) und der ersten Teleskopstange (8021) verbunden sind.

5. Walzwerkbereich-Produktionsausrüstung mit einer winkelverstellbaren Betätigungsplattenseitenführung nach Anspruch 4, wobei der zweite Betätigungsarm (803) eine zweite Teleskopstange (8031) und einen zweiten festen Kasten (8032) umfasst, die angetriebenen Einheiten (806) einen zweiten Antriebszylinder (8062) umfassen, der zweite feste Kasten (8032) eine rechteckige zylindrische Struktur ist, die in einer horizontalen Richtung fest angeordnet ist, ein Ende des zweiten feststehenden Kastens (8032) geöffnet ist, ein Ende der zweiten Teleskopstange (8031) sich von der Öffnung aus verschiebbar in den zweiten feststehenden Kasten (8032) erstrecken kann, ein Scharnierelement (8033) fest an dem anderen Ende der zweiten Teleskopstange (8031) angeordnet ist und beide Enden des zweiten Antriebszylinders (8062) entsprechend fest mit Außenwänden des zweiten feststehenden Kastens (8032) und der zweiten Teleskopstange (8031) verbunden sind.

6. Walzwerkbereich-Produktionsausrüstung mit einer winkelverstellbaren Betätigungsplattenseitenführung nach Anspruch 5, wobei der erste feststehende Kasten (8022) und der zweite feststehende Kasten (8032) durch eine Verbindungsstange (805) fest verbunden sind.

7. Walzwerkbereich-Produktionsausrüstung mit einer winkelverstellbaren Betätigungsplattenseitenführung nach Anspruch 1, wobei eine verschleißfeste Gleitplatte (804) an der Seitenwand der Betätigungsplatte (801) gegenüberliegend der Montagenut (8011) fest angeordnet ist.

8. Walzwerkbereich-Produktionsausrüstung mit einer winkelverstellbaren Betätigungsplattenseitenführung nach Anspruch 2, wobei der eintrittsseitige Drehrollentisch (1) und der austrittsseitige Drehrollentisch (3) beide aus einer Vielzahl von ersten Rollentischen bestehen, die in horizontaler Richtung nebeneinander angeordnet sind, die ersten Rollentische jeweils mit ersten Rollentischmotoren verbunden sind und die angrenzenden ersten Rollentischmotoren in der Lage sind, die entsprechenden ersten Rollentische zur Drehung in dieselbe Richtung oder in gegenüberliegende Richtungen anzutreiben.

9. Walzwerkbereich-Produktionsausrüstung mit einer winkelverstellbaren Betätigungsplattenseitenführung nach Anspruch 2, wobei eine Einlassgerüstwalze (5) zwischen einem Ausgangsende des eintrittsseitigen Drehrollentischs (1) und dem Walzwerk (2) und eine Auslassgerüstwalze (6) zwischen dem Walzwerk (2) und dem Eingangsende des austrittsseitigen Drehrollentischs (3) angeordnet ist;
wobei die Einlassgerüstwalze (5) und die Auslassgerüstwalze (6) beide aus einer Vielzahl von zweiten Rollentischen bestehen, die in horizontaler Richtung nebeneinander angeordnet sind, und eine Seite jedes der zweiten Rollentische mit einem zweiten Rollentischmotor angeordnet ist, durch den der zweite Rollentisch zur Drehung angetrieben wird.

10. Walzwerkbereich-Produktionsausrüstung mit einer winkelverstellbaren Betätigungsplattenseitenführung nach Anspruch 2, ferner umfassend einen eintrittsseitigen Transportrollentisch (4) und einen austrittsseitigen Transportrollentisch (7), wobei ein Ausgangsende des eintrittsseitigen Transportrollentischs (4) mit einem Eingangsende des eintrittsseitigen Drehrollentischs (1) verbunden ist und das Eingangsende des austrittsseitigen Transportrollentischs (7) mit dem Ausgangsende des austrittsseitigen Drehrollentischs (3) verbunden ist;
wobei der eintrittsseitige Transportrollentisch (4) und der austrittsseitige Transportrollentisch (7) beide aus einer Vielzahl von dritten Rollentischen bestehen, die in horizontaler Richtung nebeneinander angeordnet sind, wobei eine Seite jedes der dritten Rollentische mit einem dritten Rollentischmotor bereitgestellt ist, durch den der dritte Rollentisch zur Drehung angetrieben wird.

11. Warmwalzproduktionslinie, umfassend einen Walzwerkinstallationsbereich, wobei der Walzwerkinstallationsbereich darin mit der Walzwerkbereich-Produktionsausrüstung mit einer winkelverstellbaren Betätigungsplattenseitenführung nach einem der vorhergehenden Ansprüche 1 bis 10 bereitgestellt wird.

12. Warmwalzproduktionslinie nach Anspruch 11, wobei der Walzwerkinstallationsbereich ein eingerüstiger Walzwerkbereich ist und der eingerüstige Walzwerkbereich darin mit der Walzwerkbereich-Produktionsausrüstung mit einer winkelverstellbaren Betätigungsplattenseitenführung bereitgestellt ist.

13. Warmwalzproduktionslinie nach Anspruch 11, wobei der Walzwerkinstallationsbereich einen Vorwalzwerkbereich und einen Fertigwalzwerkbereich umfasst, ein Ausgangsende des Vorwalzwerkbereichs mit einem Eingangsende des Fertigwalzwerkbereichs verbunden ist und die Walzwerkbereich-Produktionsausrüstung mit einer winkelverstellbaren Betätigungsplattenseitenführung in dem Vorwalzwerkbereich und/oder dem Fertigwalzwerkbereich bereitgestellt ist.

## Revendications

1. Équipement de production de zone de laminoir avec guide latéral à angle ajustable de plaque de poussée, comprenant un guide latéral (8) capable d'ajuster un angle formé par une ligne centrale d'une pièce de laminage (10) et une ligne centrale de laminage à un angle prédéfini, **caractérisé en ce que** le guide latéral (8) comprend des plaques de poussée (801) situées sur les deux côtés d'une table à rouleaux rotatifs (11), des bras de poussée (800) raccordés aux plaques de poussée (801), et des unités entraînées (806), les unités entraînées (806) sont capables d'entraîner les bras de poussée (800) de manière à entraîner les plaques de poussée (801) pour se rapprocher de la pièce de laminage (10), serrer les parois externes sur les deux côtés de la pièce de laminage (10) et entraîner la pièce de laminage (10) en rotation à l'angle prédéfini ;
dans lequel les bras de poussée (800) comprennent un premier bras de poussée (802) et un deuxième bras de poussée (803) qui sont capables d'être ajustés de manière télescopique, et la plaque de poussée (801) est raccordée pivotante à des extrémités sur le même côté du premier bras de poussée (802) et du deuxième bras de poussée (803), les unités entraînées (806) sont capables d'ajuster l'allongement et la contraction du premier bras de poussée (802) et du deuxième bras de poussée (803) dans une direction s'approchant de la pièce de laminage (10), de manière à ajuster l'angle prédéfini des plaques de poussée (800), de sorte que les plaques de poussée (801) soient capables de serrer les parois externes sur les deux côtés de la pièce de laminage (10) ;
dans lequel le premier bras de poussée (802) et le deuxième bras de poussée (803) sont disposés en parallèle dans une direction horizontale, le premier bras de poussée (802) et le deuxième bras de poussée (803) sont fixés sur les deux côtés de la table à rouleaux rotatifs (11), **caractérisé en ce que** :
une rainure d'installation (8011) est prévue sur une paroi latérale de la plaque de poussée (801), et une extrémité sur un côté du premier bras de poussée (802) s'étend dans la rainure d'installation (8011) et est raccordée pivotante à une paroi interne de la rainure d'installation (8011), un élément de charnière cylindrique (8033) est fixé sur une extrémité sur un côté du deuxième bras de poussée (803), des trous de charnière allongés (8012) sont prévus respectivement sur des parois internes haute et basse de la rainure d'installation (8011), et l'extrémité du deuxième bras de poussée (803) s'étend dans la rainure d'installation (8011) et le haut et le bas de l'élément de charnière (8033) sont capables d'être incorporés par coulissement dans le trou de charnière (8012) correspondant.

2. Équipement de production de zone de laminoir avec guide latéral à angle ajustable de plaque de poussée selon la revendication 1, dans lequel la table à rouleaux rotatifs (11) comprend une table à rouleaux rotatifs côté entrée (1) et une table à rouleaux rotatifs côté sortie (3), il existe une pluralité de guides latéraux (8), et un laminoir (2) est disposé entre une extrémité de sortie de la table à rouleaux rotatifs côté entrée (1) et une extrémité d'entrée de la table à rouleaux rotatifs côté sortie (3), et la pluralité de guides latéraux (8) sont disposés en correspondance sur les deux côtés de la table à rouleaux rotatifs côté entrée (1) et de la table à rouleaux rotatifs côté sortie (3).

3. Équipement de production de zone de laminoir avec guide latéral à angle ajustable de plaque de poussée selon la revendication 1, le guide latéral (8) étant configuré de sorte que l'angle formé par la ligne centrale de la pièce de laminage (10) et la ligne centrale de laminage soit ajustable à un angle prédéfini dans une plage de -90° à +90°.

4. Équipement de production de zone de laminoir avec guide latéral à angle ajustable de plaque de poussée selon la revendication 1, dans lequel le premier bras de poussée (802) comprend une première tige télescopique (8021) et un premier boîtier fixe (8022), les unités entraînées (806) comprennent un premier cylindre d'entraînement (8061), le premier boîtier fixe (8022) est une structure cylindrique rectangulaire qui est disposée fixe dans une direction horizontale, une extrémité du premier boîtier fixe (8022) est ouverte, une extrémité de la première tige télescopique (8021) est capable de s'étendre par coulissement dans le premier boîtier fixe (8022) à partir de l'ouverture, l'autre extrémité de la première tige télescopique (8021) est raccordée pivotante à la plaque de poussée (801), et les deux extrémités du premier cylindre d'entraînement (8061) sont raccordées fixe en correspondance au premier boîtier fixe (8022) et à la première tige télescopique (8021).

5. Équipement de production de zone de laminoir avec guide latéral à angle ajustable de plaque de poussée selon la revendication 4, dans lequel le deuxième bras de poussée (803) comprend une deuxième tige télescopique (8031) et un deuxième boîtier fixe (8032), les unités entraînées (806) comprennent un deuxième cylindre d'entraînement (8062), le deuxième boîtier fixe (8032) est une structure cylindrique rectangulaire qui est disposée fixe dans une direction horizontale, une extrémité du deuxième boîtier fixe (8032) est ouverte, une extrémité de la deuxième tige télescopique (8031) est capable de s'étendre par coulissement dans le deuxième boîtier fixe (8032) à partir de l'ouverture, un élément de charnière (8033) est disposé fixe sur l'autre extrémité de la deuxième tige télescopique (8031), et les deux extrémités du deuxième cylindre d'entraînement (8062) sont raccordées fixement en correspondance aux parois externes du deuxième boîtier fixe (8032) et de la deuxième tige télescopique (8031).

6. Équipement de production de zone de laminoir avec guide latéral à angle ajustable de plaque de poussée selon la revendication 5, dans lequel le premier boîtier fixe (8022) et le deuxième boîtier fixe (8032) sont raccordés fixement par le biais d'une bielle (805).

7. Équipement de production de zone de laminoir avec guide latéral à angle ajustable de plaque de poussée selon la revendication 1, dans lequel une plaque coulissante résistant à l'usure (804) est disposée fixe sur la paroi latérale de la plaque de poussée (801) opposée à la rainure d'installation (8011).

8. Équipement de production de zone de laminoir avec guide latéral à angle ajustable de plaque de poussée selon la revendication 2, dans lequel la table à rouleaux rotatifs côté entrée (1) et la table à rouleaux rotatifs côté sortie (3) sont toutes deux composées d'une pluralité de premières tables à rouleaux disposées côte à côte dans une direction horizontale, les premières tables à rouleaux sont raccordées à des premiers moteurs de tables à rouleaux respectivement, et les premiers moteurs de tables à rouleaux adjacents sont capables d'entraîner les premières tables à rouleaux correspondantes en rotation dans une même direction ou des directions opposées.

9. Équipement de production de zone de laminoir avec guide latéral à angle ajustable de plaque de poussée selon la revendication 2, dans lequel un rouleau de cage d'entrée (5) est disposé entre une extrémité de sortie de la table à rouleaux rotatifs côté entrée (1) et le laminoir (2), et un rouleau de cage de sortie (6) est disposé entre le laminoir (2) et l'extrémité d'entrée de la table à rouleaux rotatifs côté sortie (3) ;
dans lequel le rouleau de cage d'entrée (5) et le rouleau de cage de sortie (6) sont tous deux composés d'une pluralité de deuxièmes tables à rouleaux disposées côte à côte dans une direction horizontale, et un côté de chacune des deuxièmes tables à rouleaux est disposé avec un deuxième moteur de table à rouleaux par lequel la deuxième table à rouleaux est entraînée en rotation.

10. Équipement de production de zone de laminoir avec guide latéral à angle ajustable de plaque de poussée selon la revendication 2, comprenant en outre une table à rouleaux de transport côté entrée (4) et une table à rouleaux de transport côté sortie (7), une extrémité de sortie de la table à rouleaux de transport côté entrée (4) est raccordée à une extrémité d'entrée de la table de rouleaux rotatifs côté entrée (1), et l'extrémité d'entrée de la table à rouleaux de transport côté sortie (7) est raccordée à l'extrémité de sortie de la table à rouleaux rotatifs côté sortie (3) ;
dans lequel la table à rouleaux de transport côté entrée (4) et la table à rouleaux de transport côté sortie (7) sont toutes deux composées d'une pluralité de troisièmes tables à rouleaux disposées côte à côte dans une direction horizontale, un côté de chacune des troisièmes tables à rouleaux est muni d'un troisième moteur de table à rouleaux par lequel la troisième table à rouleaux est entraînée en rotation.

11. Chaîne de production de laminage à chaud comprenant une zone d'installation de laminoir, dans laquelle la zone d'installation de laminoir est pourvue en son sein de l'équipement de production de zone de laminoir avec guide latéral à angle ajustable de plaque de poussée selon l'une quelconque des revendications 1 à 10.

12. Chaîne de production de laminage à chaud selon la revendication 11, dans laquelle la zone d'installation de laminoir est une zone de laminoir à cage unique, et la zone de laminoir à cage unique est pourvue en son sein de l'équipement de production de zone de laminoir avec guide latéral à angle ajustable de plaque de poussée.

13. Chaîne de production de laminage à chaud selon la revendication 11, dans laquelle la zone d'installation de laminage comprend une zone de laminage grossier et une zone de laminage de finition, une extrémité de sortie de la zone de laminage grossier est raccordée à une extrémité d'entrée de la zone de laminage de finition et l'équipement de production de zone de laminoir avec guide latéral à angle ajustable de plaque de poussée est prévu dans la zone de laminoir grossier et/ou la zone de laminoir de finition.
